Europäisches Patentamt

European Patent Office

Office européen des brevets

(11) Numéro de publication: **0 232 676**
**A1**

(12) # DEMANDE DE BREVET EUROPEEN

(21) Numéro de dépôt: 86810070.2

(22) Date de dépôt: 10.02.86

(51) Int. Cl.⁴: **G06K 15/12**

(43) Date de publication de la demande:
**19.08.87 Bulletin 87/34**

(84) Etats contractants désignés:
**AT BE CH DE FR GB IT LI LU NL SE**

(71) Demandeur: **FONDATION SUISSE POUR LA RECHERCHE EN MICROTECHNIQUE**
**Rue Jaquet-Droz 7**
**CH-2000 Neuchâtel 7(CH)**

(72) Inventeur: **Genequand, Pierre**
**Rue Moillebeau 25**
**CH-1209 Geneve(CH)**

(74) Mandataire: **Nithardt, Roland**
**CABINET ROLAND NITHARDT Rue Edouard Verdan 15**
**CH-1400 Yverdon(CH)**

(54) **Procédé d'impression électrophotographique matricielle et dispositif pour la mise en oeuvre de ce procédé.**

(57) La présente invention concerne un procédé d'impression électrophotographique matricielle, ainsi qu'un dispositif pour la mise en oeuvre de ce procédé.

Ce dispositif comporte un assemblage plan de plaquettes de modulation disposées alternativement selon deux lignes parallèles (10, 20), un guide de lumière (30) destiné à guider la lumière émise par une source quasi ponctuelle (31) sous forme de deux nappes convergentes traversant respectivement les deux lignes de modulateurs, et un tambour rotatif (32) dont la surface latérale est constituée par un support photosensible (26). Le guide optique (30) est formé d'une plaque à faces planes parallèles, délimitée par trois bordures (35, 36 et 39). La bordure (35) a une forme toroïdale dont le centre correspond à la position de la source (31), la seconde bordure (36) a une forme cylindro-parabolique et la troisième bordure (39) est constituée par un dièdre dont l'arête (40) est parallèle aux faces planes du guide.

Ce dispositif permet d'effectuer une écriture ligne par ligne selon une direction sensiblement parallèle à l'axe de rotation du support photosensible.

# PROCEDE D'IMPRESSION ELECTROPHOTOGRAPHIQUE MATRICIELLE ET DISPOSITIF POUR LA MISE EN OEUVRE DE CE PROCEDE

La présente invention concerne un procédé d'impression électrophotographique matricielle, dans lequel on projette un faisceau lumineux sur un ensemble de modulateurs électro-optiques disposés suivant des segments de ligne, et dans lequel on recombine ce faisceau, après traversée desdits modulateurs, en une même ligne continue sur un support photosensible en mouvement.

L'invention concerne également un dispositif pour la mise en oeuvre de ce procédé, comprenant une source de lumière quasi ponctuelle, un ensemble de modulateurs électro-optiques disposés selon des segments de ligne et un guide optique destiné à conduire la lumière de la source à l'ensemble de modulateurs, de telle manière que la lumière traversant ces modulateurs se recombine en une ligne continue sur un tambour photosensible en rotation.

Les imprimantes électrophotographiques sont basées sur l'illumination sélective, par des moyens opto-électroniques, de la surface photosensible d'un tambour rotatif. En général, l'écriture se fait ligne par ligne selon une direction sensiblement parallèle à l'axe du tambour. La succession de ces lignes, lorsque le tambour est en rotation, forme une image matricielle du document graphique à reproduire.

Le principe le plus connu fait appel à un faisceau laser modulé en intensité par un dispositif acousto-optique et réfléchi par un miroir polygonal tournant de façon à balayer rapidement la ligne d'écriture. Ce système, qui a l'avantage d'une grande flexibilité en vitesse et en résolution, présente divers inconvénients parmi lesquels l'encombrement lié aux grandes distances focales de l'optique de concentration du faisceau sur la ligne balayée, le coût de cette optique qui doit compenser les variations de longueur focale entre le centre et les extrémités de la ligne, ainsi que le coût de réalisation d'un miroir de haute précision tournant à haute vitesse.

Pour pallier ces inconvénients, on a proposé de substituer au faisceau laser balayé une ligne d'éléments électro-optiques discrets, modulés en parallèle. Ces éléments peuvent être des sources actives telles que des diodes photoémettrices ou des composants passifs tels que des modulateurs de lumière. De tels systèmes sont intrinsèquement beaucoup plus compacts que les imprimantes à laser et ont l'avantage de ne pas comporter de pièce mobile. Toutefois, pour obtenir une résolution suffisante, de l'ordre de 10 à 15 points au mm, le nombre d'éléments nécessaires à la réalisation d'une ligne est très élevé, de l'ordre de 2'000 à 3'000 pour une ligne standard de 210 mm. Ces éléments doivent être adressés chacun par un circuit électronique de commande. Une telle densité d'éléments et de circuits implique nécessairement, pour une production économique, le recours aux techniques de fabrication des circuits intégrés. Or, on sait que ces derniers sont découpés sous forme de puces à partir de plaques de dimension limitée, qui se situe actuellement aux alentours de 100 mm de diamètre. De plus, la taille individuelle d'une puce est beaucoup plus faible que celle d'une plaque, pour que la surface soit bien remplie d'une part et pour que la présence de défauts de fabrication, qui sont statistiquement inévitables en nombre proportionnel à la surface, ne fasse pas tomber le rendement en puces utilisables en dessous d'un taux raisonnable.

En ce qui concerne les éléments électro-optiques de modulation, la taille maximale d'un segment monolithique de ligne ne peut guère excéder 30 à 40 mm. Ainsi donc, il faut, pour réaliser une ligne complète de 210 mm, juxtaposer bout à bout de six à huit segments. Cela pose le problème de la continuité de la ligne d'écriture. En effet, chaque segment de ligne présente physiquement une bordure non active, constituée par le bord de sciage et d'encapsulation, qui interrompt la ligne par un espace mort lors de la juxtaposition.

Un autre problème, dans le cas de lignes de modulateurs passifs, est celui de l'amenée de la lumière à moduler jusqu'aux éléments électro-optiques.

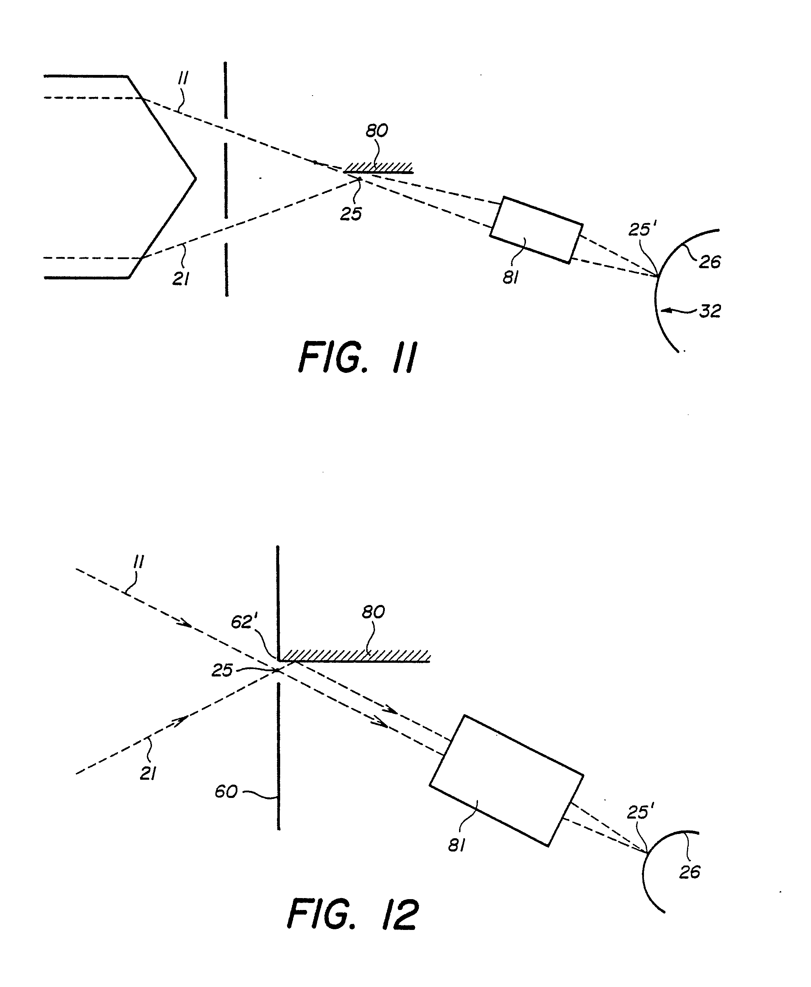

Ces deux problèmes n'ont pas été résolus de façon satisfaisante. Par exemple, on connaît une tête imprimante à modulateurs magnéto-optiques, décrite dans l'article "Advances in Laser and Electrooptic printing technology" de R.A. Sprague, J.C. Urbach et T.S. Fisli, paru dans la revue Laser Focus d'octobre 1983 à la page 101 et illustré plus particulièrement par la fig. 11, dans laquelle la lumière est conduite d'une source concentrée à une rangée de segments de modulateurs au moyen d'un convertisseur à fibres optiques disposées en éventail. Les images alignées mais disjointes des segments de ligne sont ensuite focalisées légèrement agrandies sur le tambour, de façon à reformer une ligne continue grâce à une série d'objectifs de gros diamètre, correspondant chacun à un segment. Tant l'éventail de fibres constitué par plusieurs milliers de fibres à aligner en face des modulateurs que la série d'objectifs représentent des adjonctions coûteuses. En outre, la rangée d'objectifs est encombrante et l'ajustement des images des segments de ligne est délicat.

La présente invention a pour but de pallier ces divers inconvénients en proposant un procédé d'impression tel que mentionné ci-dessus, caractérisé en ce que l'on place les segments de ligne de modulateurs alternativement selon deux lignes parallèles, en ce que l'on divise le faisceau lumineux incident en deux nappes convergentes dont chacune est projetée sur une ligne de segments, et en ce que l'on définit l'espacement des segments et la direction des rayons lumineux de chaque nappe de telle manière que la succession de rayons issus de chaque modulateur, lorsqu'on parcourt les segments successifs alternativement d'une ligne à l'autre, forme, sur la ligne de convergence des deux nappes, une succession continue d'images des modulateurs de l'ensemble.

Selon l'une des formes de mise en oeuvre de ce procédé, on forme la ligne de convergence des deux nappes convergentes directement sur la surface photosensible. Selon un autre mode de mise en oeuvre, on projette l'image de la ligne de convergence des deux nappes convergentes sur la surface photosensible au moyen d'un dispositif optique de renvoi.

Le dispositif pour la mise en oeuvre de ce procédé est caractérisé en ce que le guide optique, destiné à conduire la lumière de la source quasi ponctuelle à l'ensemble de modulateurs, est constitué d'une plaque transparente d'indice de réfraction supérieur à 1, possédant deux faces planes parallèles et polies qui la délimitent en épaisseur, le pourtour de cette plaque étant défini par au moins trois bordures, dont la première forme une surface toroïdale polie disposée de telle manière que les rayons lumineux de la source ponctuelle, placée au centre de symétrie de cette surface, sont réfractés à l'intérieur de la plaque selon des rayons parallèles aux faces planes et selon des directions dont les projections sur un plan parallèle auxdites faces sont concourantes en un point correspondant à la projection sur ce plan de la source ponctuelle, dont la seconde forme une surface cylindro-parabolique perpendiculaire aux faces planes et dont l'axe focal passe par la source ponctuelle, cette surface polie et recouverte d'une couche réflectrice renvoyant la lumière issue de la source selon un faisceau de rayons parallèles entre eux, et dont la troisième forme un dièdre, d'arête parallèle aux deux faces polies et perpendiculaire aux rayons issus de la bordure parabolique, ce dièdre réfractant lesdits rayons selon deux nappes convergentes.

Selon un mode de réalisation préféré, les modulateurs sont constitués par un assemblage plan de plaquettes de modulation, dont chacune contient un segment de la ligne de modulateurs, ces plaquettes étant placées de telle manière que les segments soient disposés alternativement selon deux lignes parallèles à l'arête du dièdre de la troisième bordure du guide optique, le plan de l'assemblage étant perpendiculaire aux faces planes de la plaque transparente, la position et la longueur des segments étant telles que la projection perpendiculaire de ces segments sur l'autre ligne coïncide exactement avec les espaces disponibles entre les segments de cette autre ligne.

Selon un mode de réalisation particulièrement avantageux, la ligne de convergence des éléments de nappes lumineuses issus des segments de lignes de modulateurs est confondue avec une génératrice d'une surface cylindrique circulaire formant la surface photosensible du tambour en rotation.

Selon une variante, ce dispositif comporte un écran plan sensiblement parallèle à l'ensemble de modulateurs, cet écran étant disposé au niveau de la ligne de convergence des deux nappes lumineuses et présentant une ouverture en forme de fente positionnée le long de la ligne de convergence, de manière à ne laisser passer que les rayons des deux nappes traversant directement les modulateurs et à exclure la lumière diffusée au passage des modulateurs.

Selon une autre forme de réalisation avantageuse du dispositif selon l'invention, le guide d'onde a un indice de réfraction supérieur ou égal à 1,5 et sa deuxième bordure comporte deux surfaces polies dont l'arête d'intersection forme une parabole dont le foyer correspond à l'emplacement de la source quasi ponctuelle, cette parabole étant située dans le plan de symétrie du guide et ces deux surfaces étant perpendiculaires l'une à l'autre tout au long de la parabole et symétriques par rapport au plan de symétrie du guide d'onde. Dans cette forme de réalisation, la deuxième bordure renvoie les rayons lumineux par réflexion totale.

Lorsque pour diverses raisons, on ne souhaite pas placer l'assemblage de modulation à proximité immédiate de la surface photosensible, une variante du dispositif selon l'invention consiste à prévoir un dispositif de renvoi optique agencé pour former, sur la surface photosensible du tambour, l'image d'une ligne virtuelle correspondant approximativement à la ligne de convergence.

Selon un mode de réalisation préféré, ce dispositif optique comporte un miroir plan disposé sur le chemin de l'une des deux nappes convergentes, immédiatement en aval de la ligne de convergence et orienté de manière à renvoyer la nappe interceptée suivant un angle d'ouverture suffisamment faible par rapport à l'autre nappe pour que ces deux nappes puissent être admises dans une optique linéaire à gradient d'indice.

La présente invention, ses caractéristiques et ses principaux avantages seront mieux compris en référence à la description d'un exemple de réalisation et du dessin annexé, dans lequel :

La figure 1 représente une vue schématique en élévation illustrant le principe du procédé selon l'invention,

La figure 2 représente une vue schématique en plan des deux lignes de modulateurs utilisés pour la mise en oeuvre du procédé selon l'invention,

La figure 3 représente une vue schématique en perspective illustrant le principe du procédé selon l'invention,

La figure 4 est une vue en élévation du dispositif selon l'invention,

La figure 5 est une vue en plan du dispositif selon la fig. 4,

La figure 6 représente une vue de face d'une forme de réalisation d'un assemblage de plaquettes de modulation,

La figure 7 représente une autre forme de réalisation d'un assemblage de plaquettes de modulation,

La figure 8 représente une vue en coupe partielle du dispositif selon l'invention équipé d'un écran de filtrage de la lumière diffuse,

Les figures 9 et 10 représentent des vues en élévation et en plan d'une autre forme de réalisation du guide de lumière du dispositif selon l'invention,

La figure 11 est une vue de profil d'une autre forme de réalisation du dispositif selon l'invention équipé de moyens de renvoi optique, et

La fig. 12 est une vue partielle de profil du dispositif selon l'invention selon une forme de réalisation munie d'un écran de filtrage combiné avec un miroir de renvoi optique.

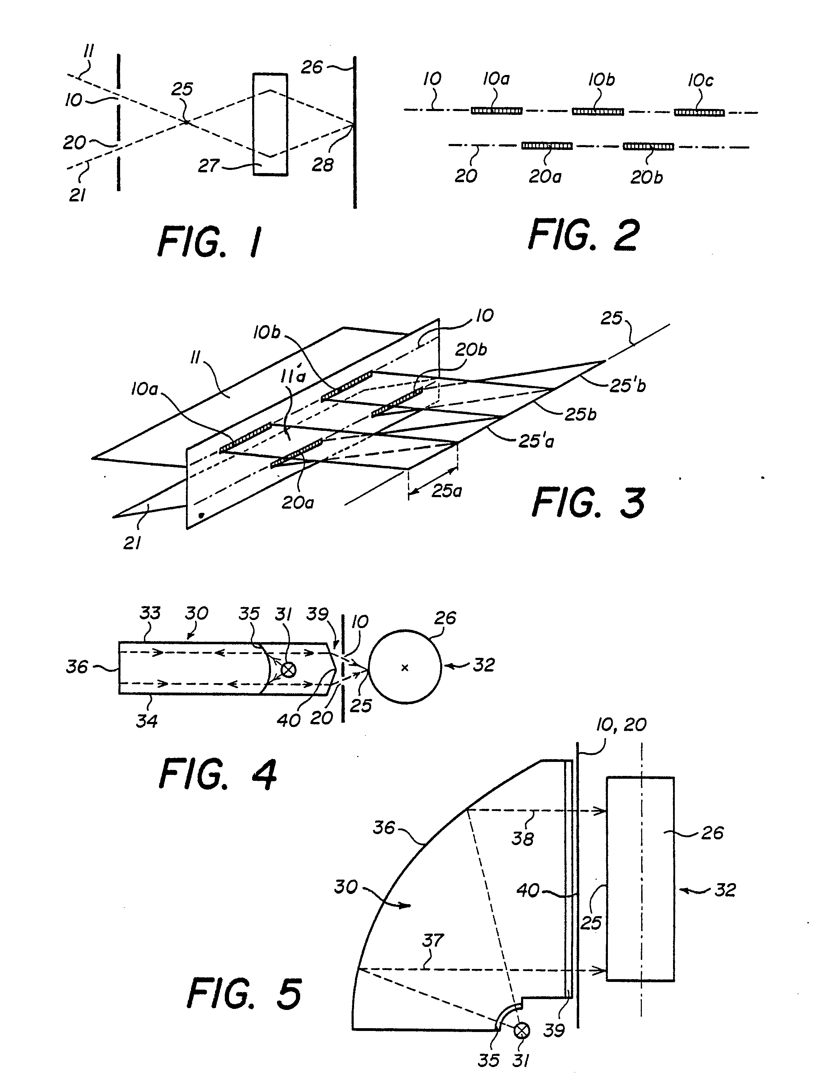

En référence aux fig. 1 à 3, le principe du procédé selon l'invention est basé sur l'utilisation de deux lignes 10 et 20 de modulateurs ayant la forme de segments 10a, 10b, 10c, etc., 20a, 20b, 20c, etc., respectivement disposés sur les lignes 10 et 20 d'un faisceau lumineux incident divisé en deux nappes de lumière 11 et 21 qui convergent sur une ligne de convergence 25, et d'un support photosensible 26 sur lequel on forme, au moyen d'un système optique de renvoi 27, une image 28 de la ligne de convergence 25.

Comme le montrent plus particulièrement les fig. 2 et 3, les segments de modulateurs, distribués sur les deux lignes 10 et 20, sont décalés d'une ligne à l'autre. De ce fait, l'élément de nappe 11'a, correspondant à la nappe incidente 11 et émergeant du modulateur 10a, forme un premier tronçon 25a de la ligne de convergence 25. Le second tronçon 25'a, correspondant au modulateur 20a, est issu de la nappe 21. Le troisième tronçon 25b, correspondant au modulateur 10b, est à nouveau issu de la nappe 11, et ainsi de suite. Les modulateurs 10a, 20a, 10b, 20b, etc. sont disposés alternativement sur les deux lignes 10 et 20 de telle manière que les segments 25a, 25'a, 25b, 25'b, etc. forment une ligne de convergence 25 continue. De cette manière, la ligne d'écriture sur le support photosensible est ininterrompue. Cette ligne d'écriture peut être confondue avec la ligne de convergence lorsque l'on forme cette ligne de convergence directement sur le support photosensible ou avec l'image de la ligne de convergence lorsque l'on utilise un système optique de renvoi 27 comme le montre la fig. 1.

Le dispositif illusté par les fig. 4 à 7 comporte un guide optique 30 destiné à conduire la lumière d'une source ponctuelle 31, à travers l'ensemble des modulateurs disposés selon les deux lignes 10 et 20, sur un tambour rotatif 32 portant le support photosensible 26. Le guide optique 30 est constitué d'une plaque transparente d'indice de réfraction supérieur à 1, réalisée par exemple en un matériau thermoformable commercialisé sous la dénomination "Plexiglas": Cette plaque comporte deux faces planes parallèles 33 et 34 polies qui la limitent en épaisseur. Son contour est défini par trois bordures, dont la première est une surface toroïdale polie 35 dont le centre de symétrie correspond à la source quasi ponctuelle 31, de telle manière que les rayons lumineux émis par cette source de lumière sont réfractés à l'intérieur de la plaque selon des rayons parallèles aux faces planes 33 et 34, et suivant des directions dont les projections sur un plan parallèle auxdites faces planes 33 et 34 sont concourantes en un point correspondant à la projection sur ce plan de la source ponctuelle 31. La seconde bordure forme une surface cylindro-parabolique 36 perpendiculaire aux deux faces planes et dont l'axe focal passe par la source ponctuelle. Cette surface est polie et recouverte d'une couche réflectrice renvoyant la lumière issue de la source 31 selon un faisceau de rayons 37, 38 parallèles entre eux. La troisième bordure forme un dièdre 39 d'arête 40 parallèle aux deux faces planes 33 et 34, et perpendiculaire aux rayons 37, 38 réfléchis par la seconde bordure. Ce dièdre réfracte lesdits rayons selon les deux nappes convergentes 11 et 21. La ligne de convergence 25 de ces deux nappes 11 et 21 se confond avec une génératrice de la surface photosensible 26 formant la surface latérale du tambour 32.

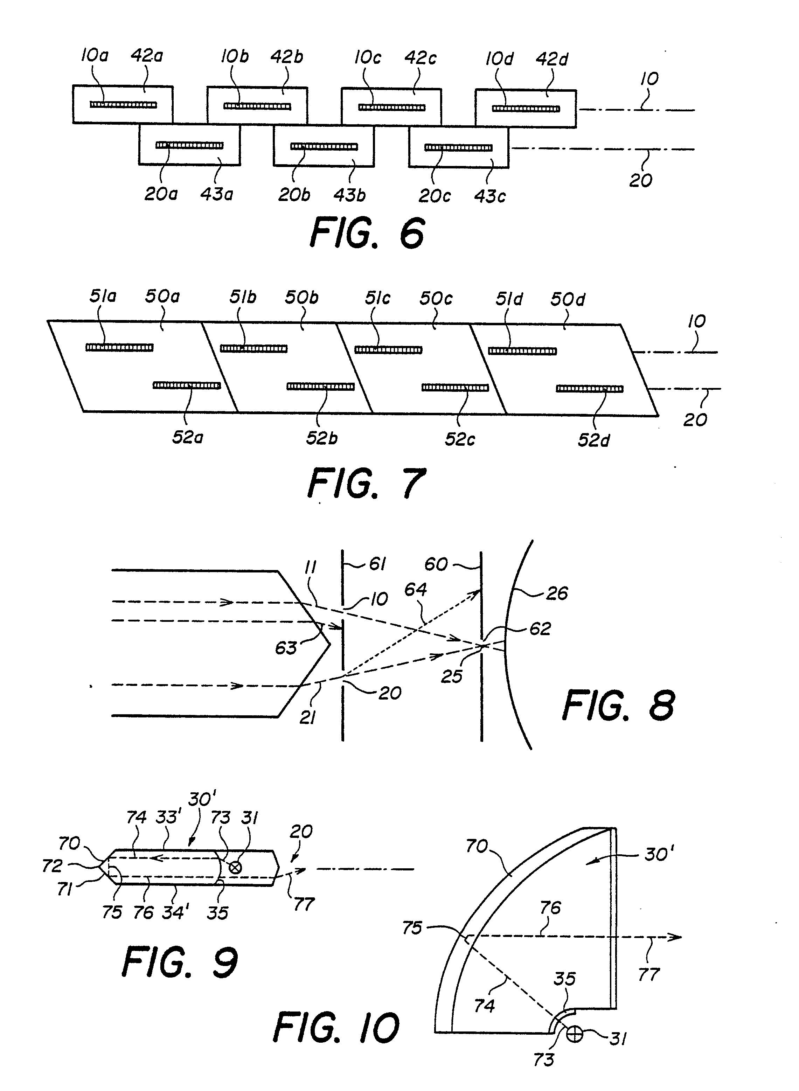

Les nappes convergentes 11 et 21 sont projetées sur les lignes de plaquettes 10 et 20 qui se présentent sous la forme d'un assemblage de plaquettes de modulation tel que représenté par les fig. 6 et 7.

Dans l'exemple de la fig. 6, les plaquettes 42a, 42b, 42c, 42d, etc. compor tent chacune un segment de modulateurs 10a, 10b, 10c, 10d, etc. et les plaquettes 43a, 43b, 43c, 43d, etc. comportent chacune un segment de modulateurs 20a, 20b, 20c, 20d, etc. Les plaquettes 42a, 42b, etc. sont disposées de telle manière que les segments des modulateurs correspondants 10a, 10b, etc. soient alignés sur la ligne 10. Les plaquettes 43a, 43b, etc. sont disposées de telle manière que les segments de modulateurs 20a, 20b, etc. sont alignés sur la ligne 20. Les deux lignes 10 et 20 sont parallèles à l'arête 40 du dièdre 39. Le plan de l'assemblage est perpendiculaire aux deux faces planes 33 et 34 de la plaque transparente 30. La position et la longueur des segments de modulateurs sur une ligne, par exemple la position et la longueur du segment 10b sur la ligne 10, sont telles que la projection perpendiculaire de ces segments sur l'autre ligne coïncide exactement avec l'espace disponible entre les segments de cette autre ligne, par exemple l'espace disponible entre les segments 20a et 20b de la ligne 20.

Dans l'exemple illustré par la fig. 7, chaque plaquette de modulation 50a, 50b, etc. comporte un couple de segments de modulateurs 51a, 52a; 51b, 52b, etc. dont les éléments sont respectivement décalés sur les deux lignes 10 et 20.

La fig. 8 illustre un perfectionnement du dispositif illustré par la fig. 4, destiné à améliorer la résolution dans le sens de la rotation du tambour. A cet effet, un écran plan 60 est placé entre le plan 61 contenant l'assemblage des plaquettes de modulation disposées selon les deux lignes 10 et 20 et le support photosensible 26. Cet écran 60 est placé au niveau de la ligne de convergence 25 des deux nappes de lumière 11 et 21 et comporte à cet endroit une fente 62 destinée à laisser passer la lumière provenant de ces nappes après son passage à travers les segments de modulation. La lumière illustrée par le rayon 63, ne provenant pas directement de l'une de ces nappes, est arrêtée par l'assemblage de plaquettes de modulation. La lumière, dispersée par défaut de collimation ou diffusée par les segments de modulation et illustrée par le rayon 64, est arrêtée par l'écran 60. Il apparaît donc comme évident que l'adjonction de l'écran 60 permet d'améliorer la résolution du système.

Une variante du dispositif des fig. 4 est 5 est illustrée par les fig. 9 et 10, où la couche réfléchissante recouvrant la bordure 36 de la plaque 30 est remplacée par une structure qui renvoie les rayons lumineux par réflexion totale. La deuxième bordure du guide d'onde 30' est constituée par deux surfaces polies 70 et 71, dont l'arête d'intersection 72 a la forme d'une parabole dont le foyer correspond à l'emplacement de la source lumineuse 31 et qui est situé dans le plan de symétrie du guide d'onde 30'. Ces deux surfaces 70 et 71 sont perpendiculaires entre elles tout au long de l'arête 72 et symétriques par rapport au plan de symétrie du guide optique 30'. Comme le montrent les figures, un rayon 73, émis par la source 31 qui pénètre dans le guide optique 30' à travers la surface toroïdale 35, chemine parallèlement à la surface 33' de ce guide selon un rayon 74 qui est réfléchi selon un rayon 75, renvoyé par la surface 71 selon un rayon 76 parallèle à la surface 34' du guide 30', et dévié par l'une des faces du dièdre de sortie selon le rayon 77 illustrant la nappe inférieure 20.

Pour diverses raisons, on peut être amené à éloigner l'ensemble de modulation de la surface photosensible. A cet effet, on peut prévoir un dispositif de renvoi optique tel qu'illustré par la fig. 11. Dans cette variante, un miroir plan 80 est interposé sur l'une des nappes convergentes, par exemple la nappe 21, immédiatement en aval de la ligne de convergence 25. Ce miroir plan est orienté de manière à renvoyer la nappe interceptée selon un angle d'ouverture suffisamment faible par rapport à l'autre nappe pour que les deux nappes puissent être admises dans une optique linéaire 81 à gradient d'indice (par exemple une optique commercialisée sous la dénomination Selfoc), disposée de manière à former, sur la surface photosensible 26 du tambour 32, l'image d'une ligne virtuelle 25' correspondant approximativement à la ligne de convergence 25.

Le miroir plan 80 peut aussi être combiné avec l'écran plan 60, comme représenté à la fig. 12, de telle manière que la fente 62 présente, avec le miroir 80, une arête commune 62'. Cette disposition permet d'obtenir un flux lumineux égal entre les deux nappes après redressement par le miroir.

Bien que non limité à un type particulier de modulateurs de lumière, le dispositif décrit ci-dessus incorporera avantageusement des segments de ligne de microvolets, constitués par exemple par des microstructures capables d'arrêter ou de laisser passer la lumière, telles que décrites dans l'article "New micromechanical display using thin metallic films" par M.A. Cadman, A. Perret, F. Porret, R. Vuilleumier et P. Weiss, dans la revue "Electron Device Letters" EDL-4 No. 1 de janvier 1983.

La présente invention n'est pas limitée aux formes de réalisation décrites, mais peut comporter diverses variantes et se présenter sous divers aspects apparentés de manière évidente pour l'homme de l'art au dispositif décrit.

## Revendications

1. Procédé d'impression électrophotographique matricielle, dans lequel on projette un faisceau lumineux sur un ensemble de modulateurs électro-optiques disposés suivant des segments de ligne, et dans lequel on recombine ce faisceau, après traversée desdits modulateurs, en une même ligne continue sur un support photosensible en mouvement, caractérisé en ce que l'on place les segments de ligne de modulateurs alternativement selon deux lignes parallèles (10, 20), en ce que l'on divise le faisceau lumineux incident en deux nappes convergentes (11, 21) dont chacune est projetée sur une ligne de segments (10a, 20a, 10b, 20b, 10c, 20c, etc.), et en ce que l'on définit l'espacement des segments et la direction des rayons lumineux de chaque nappe de telle manière que la succession de rayons issus de chaque modulateur, lorsqu'on parcourt les segments successifs alternativement d'une ligne à l'autre, forme, sur la ligne de convergence (25) des deux nappes (11, 21), une succession continue d'images (25a, 25'a, 25'b, etc.) des modulateurs de l'ensemble.

2. Procédé selon la revendication 1, caractérisé en ce que l'on forme la ligne de convergence (25) des deux nappes convergentes (11, 21) directement sur la surface photosensible (26).

3. Procédé selon la revendication 1, caractérisé en ce que l'on projette l'image (25') de la ligne de convergence (25) des deux nappes convergentes - (11, 21) sur la surface photosensible (26) au moyen d'un dispositif optique de renvoi (80, 81).

4. Dispositif pour la mise en oeuvre du procédé selon la revendication 1, comportant une source quasi ponctuelle (31), un ensemble de modulateurs électro-optiques disposés selon des segments de ligne (10a, 20a, 10b, 20b, etc.; 51a, 52a, 51b, 52b, etc.) et un guide optique (30, 30') destiné à conduire la lumière de la source à l'ensemble de modulateurs, de telle manière que la lumière traversant ces modulateurs se recombine en une ligne continue sur un tambour (32) en rotation portant un support (26) photosensible, caractérisé en ce que le guide optique (30, 30'), destiné à conduire la lumière de la source (31) quasi ponctuelle à l'ensemble de modulateurs, est constitué d'une plaque transparente d'indice de réfraction supérieur à un, possédant deux faces planes (33, 34) parallèles et polies qui la délimitent en épaisseur, le pourtour de cette plaque étant défini par au moins trois bordures, dont la première (35) forme une surface toroïdale polie, disposée de telle manière que les rayons lumineux de la source ponctuelle, placée au centre de symétrie de cette surface, sont réfractés à l'intérieur de la plaque selon des rayons parallèles aux faces planes et selon des directions dont les projections sur un plan parallèle auxdites faces sont concourantes en un point correspondant à la projection sur ce plan de la source ponctuelle, dont la seconde (36) forme une surface cylindro-parabolique perpendiculaire aux faces planes (33, 34) et dont l'axe focal passe par la source ponctuelle (31), cette surface polie et recouverte d'une couche réflectrice renvoyant la lumière issue de la source selon un faisceau de rayons (37, 38) parallèles entre eux, et dont la troisième bordure forme un dièdre (39) d'arête - (40) parallèle aux deux faces polies (33 34) et perpendiculaire aux rayons issus de la bordure parabolique, ce dièdre réfractant lesdits rayons selon deux nappes convergentes (11, 21).

5. Dispositif selon la revendication 4, caractérisé en ce que les modulateurs sont constitués par un assemblage plan de plaquettes de modulation (42a, 43a, 42b, 43b, etc.; 50a, 50b, 50c, etc.), dont chacune contient au moins un segment de la ligne de modulateurs, ces plaquettes étant placées de telle manière que les segments soient disposés alternativement selon deux lignes (10, 20) parallèlement à l'arête (40) du dièdre (39) de la troisième bordure du guide optique (30, 30'), le plan de l'assemblage étant perpendiculaire aux faces planes (33, 34; 33', 34') de la plaque transparente, et en ce que la position et la longueur des segments sur l'une des lignes sont telles que la projection perpendiculaire de ces segments sur l'autre ligne coïncide exactement avec les espaces disponibles entre les segments de cette autre ligne.

6. Dispositif selon la revendication 5, caractérisé en ce que la ligne de convergence des éléments de nappes lumineuses issus des segments de lignes de modulateurs est confondue avec une génératrice d'une surface cylindrique circulaire formant la surface photosensible (26) du tambour en rotation (32).

7. Dispositif selon la revendication 4, caractérisé en ce qu'il comporte un écran plan (60) sensiblement parallèle à l'ensemble de modulateurs, cet écran étant disposé au niveau de la ligne de convergence (25) des deux nappes lumineuses (11, 21) et présentant une ouverture (62) en forme de fente positionnée le long de la ligne de convergence, de manière à ne laisser passer que les rayons de deux nappes traversant directement les modulateurs et à exclure la lumière mal collimatée ou diffusée au passage de ces modulateurs.

8. Dispositif selon la revendication 4, caractérisé en ce que le guide optique (30') a un indice de réfraction supérieur ou égal à 1,5 et en ce que sa deuxième bordure comporte deux surfaces polies (70 et 71), dont l'arête d'intersection - (72) forme une parabole dont le foyer correspond à l'emplacement de la source quasi ponctuelle (31), cette parabole étant située dans le plan de symétrie du guide (30') et ces deux surfaces (70, 71) étant perpendiculaires l'une à l'autre tout au long de la parabole et symétriques par rapport au plan de symétrie du guide optique.

9. Dispositif selon la revendication 4, caractérisé en ce qu'il comporte un dispositif optique de renvoi, comprenant un miroir plan (80) disposé sur le chemin des deux nappes convergentes, immédiatement en aval de la ligne de convergence et orienté de manière à renvoyer la nappe interceptée suivant un angle d'ouverture suffisamment faible par rapport à l'autre nappe pour que ces deux nappes puissent être admises dans une optique linéaire à gradient d'indice (81), cette optique étant disposée de manière à former, sur la surface photosensible (26) du tambour (32), l'image (25') d'une ligne virtuelle correspondant approximativement à la ligne de convergence (25).

10. Dispositif selon la revendication 9, caractérisé en ce que le dispositif de renvoi comporte un écran plan (60) combiné avec un miroir (80), l'écran plan et la fente (62), destinée à laisser passer la lumière provenant des deux nappes, présentant une arête commune (62').

FIG. 1

FIG. 2

FIG. 3

FIG. 4

FIG. 5

FIG. 6

FIG. 7

FIG. 8

FIG. 9

FIG. 10

FIG. II

FIG. 12

**Office européen
des brevets**

**RAPPORT DE RECHERCHE EUROPEENNE**

Numero de la demande

EP   86 81 0070

## DOCUMENTS CONSIDERES COMME PERTINENTS

| Catégorie | Citation du document avec indication, en cas de besoin. des parties pertinentes | Revendication concernee | CLASSEMENT DE LA DEMANDE (Int. Cl 4) |
|---|---|---|---|
| X | EP-A-0 051 886  (DE COCK)<br>*  Figures 1-4a; page 6, ligne 19 - page 9, avant-dernier alinéa * | 1,2 | G 06 K  15/12 |
| A |  | 4-6 |  |
|  | --- |  |  |
| A | EP-A-0 080 133  (RIEDEL)<br>* Figure 1; résumé * | 1-3 |  |
|  | --- |  |  |
| A | US-A-3 827 062  (MAILLOUX)<br>* Figures 1-4; résumé * | 1,4 |  |
|  | --- |  |  |
| A | DE-A-3 031 295  (SHINTARO et al.)<br>* Figures 2,5;  page  9,  dernier alinéa  -  page 11, ligne 3; page 12, lignes 2-22 * | 1,4 |  |
|  | ----- |  | **DOMAINES TECHNIQUES RECHERCHES (Int. Cl.4)**<br><br>G 06 K |

Le présent rapport de recherche a été établi pour toutes les revendications

| Lieu de la recherche | Date d'achèvement de la recherche | Examinateur |
|---|---|---|
| LA HAYE | 10-10-1986 | FORLEN G.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille, document correspondant

OEB Form 1503 03 82